# EUROPÄISCHE PATENTSCHRIFT

(11) **EP 4 067 563 B1**
(45) Veröffentlichungstag und Bekanntmachung des Hinweises auf die Patenterteilung: **08.01.2025**
(21) Anmeldenummer: 22158499.8
(22) Anmeldetag: 24.02.2022
(51) Int. Cl.: D06F 95/00, D06F 67/04, D06F 89/00, D06F 93/00

(54) **VERFAHREN UND VORRICHTUNGEN ZUM ZUFÜHREN VON WÄSCHESTÜCKEN ZU EINER WÄSCHEREIMASCHINE, WIE INSBESONDERE EINER MANGEL**
METHOD AND DEVICES FOR FEEDING LAUNDRY ITEMS INTO A LAUNDRY TREATMENT DEVICE, IN PARTICULAR A MANGLE
PROCÉDÉ ET DISPOSITIFS D'ALIMENTATION EN LINGE D'UNE MACHINE À LAVER, EN PARTICULIER D'UNE CALANDRE

(30) Priorität: 11.03.2021 DE 102021105998; 21.07.2021 DE 102021118894
(43) Veröffentlichungstag der Anmeldung: 05.10.2022
(73) Patentinhaber: Herbert Kannegiesser GmbH, 32602 Vlotho (DE)
(72) Erfinder: Bringewatt, Wilhelm, 32457 Porta Westfalica (DE); Heinz, Engelbert, 32602 Vlotho (DE)
(74) Vertreter: Hoener, Matthias

(56) Entgegenhaltungen:
- EP-A1- 0 982 428
- EP-B1- 2 784 208
- WO-A1-2009/118643
- WO-A1-2018/130418
- DE-A1- 102018 006 466
- DE-A1- 4 143 070
- JP-A- 2007 092 255
- JP-A- 2019 154 462

## Beschreibung

Die Erfindung betrifft ein Verfahren zum Zuführen von Wäschestücken zu einer Wäschereimaschine, wie insbesondere einer Mangel, gemäß dem Oberbegriff des Anspruchs 1 sowie Vorrichtungen zum Zuführen von Wäschestücken zu einer Wäschereimaschine, wie insbesondere einer Mangel, gemäß dem Oberbegriff des Anspruchs 8.

Vorrichtungen der hier angesprochenen Art werden im Fachjargon als "Eingabemaschinen" bezeichnet. Diese dienen dazu, Wäschestücke auszubreiten und im ausgebreiteten Zustand mit voraneilendem ausgestreckten vorderen Rand der Mangel oder einer sonstigen Wäschereimaschine in Zuführrichtung zuzuführen. Dabei verläuft der gestreckte vordere Rand des Wäschestücks quer zur Zuführrichtung.

Es ist aus der WO 2018/130418 A1 eine Eingabemaschine bekannt, die Beladestationen und eine in Zuführrichtung darauffolgende Spreizeinrichtung mit mindestens einem Paar Spreizklammern aufweist. Auf die jeweilige Beladestation wird manuell oder automatisiert durch beispielsweise eine Handhabungseinrichtung ein mittiger Abschnitt des vorderen quergerichteten Rands eines jeweiligen Wäschestücks abgelegt und an die zusammengefahrenen Spreizklammern überführt. Im Bereich der Spreizeinrichtung erfolgt vor dem vollständigen Ausstrecken des vorderen Rands des Wäschestücks eine Messung der Länge desselben. Aufgrund der gemessenen Länge des vorderen Rands des Wäschestücks werden die Spreizklammern gezielt bis zur ausreichenden Streckung des vorderen Rands des Wäschestücks auseinandergefahren. Das ausgebreitete Wäschestück wird dann direkt auf einen Zuführförderer oder eine Ablegeleiste abgelegt, die das Wäschestück an den Zuführförderer übergibt. Die Messung der Länge des vorderen Rands bei in den Spreizklammern hängendem Wäschestück hat eine Verlängerung des Spreizvorgangs des Wäschestücks zur Folge. Das verringert die Zuführleistung von Wäschestücken zur Mangel oder einer sonstigen Wäschereimaschine.

Ausgehend vom Vorstehenden liegt der Erfindung die Aufgabe zugrunde, ein Verfahren und eine Vorrichtung zum Zuführen von Wäschestücken zu einer Wäschereimaschine, wie insbesondere einer Mangel, zu schaffen, das die Zuführleistung von Wäschestücken zur Mangel oder einer sonstigen Wäschereimaschine erhöht.

Ein Verfahren zur Lösung der Aufgabe weist die Maßnahmen des Anspruchs 1 auf. Demnach erfolgt die Vermessung des vorderen, quer zur Zuführrichtung verlaufenden Rands des Wäschestücks schon vor der Spreizeinrichtung, nämlich im Bereich der jeweiligen Beladestation. Dann hängen die gegenüberliegenden Ecken des vorderen Rands des Wäschestücks einem Beladeklammerpaar, der jeweiligen Beladestation. Die Ermittlung des Durchhangs des vorderen Rands des Wäschestücks erfolgt an der jeweiligen Beladestation berührungslos, beispielsweise optoelektronisch. Weil dann der Durchhang des Wäschestücks noch relativ groß ist, ist der vordere Rand bei vor allem größeren Wäschestücken noch nicht zuverlässig erkennbar ausgebildet, indem er beispielsweise verschlungen ist. Das lässt eine berührungslose Messung des vorderen Rands nicht zu. Deswegen ist ein größerer Abstand der Beladeklammern vorgesehen. Der Abstand ist so viel größer als bisher, dass sich ein V-artiger Verlauf des vorderen Rands des Wäschestücks in jedem Fall, vor allem auch bei größeren Wäschestücken, einstellt. Dadurch kann zumindest annähernd berührungslos der Durchhang des vorderen Rands des Wäschestücks in der jeweiligen Beladestation berührungslos ermittelt werden. Das macht es auch möglich, unterschiedlich große Wäschestücke unsortiert berührungslos zu vermessen.

Es ist bevorzugt vorgesehen, dass mit dem bei der Erfassung des Durchhangs vorhandenen Abstand der Beladeklammern untereinander bzw. zueinander das Wäschestück von den Beladeklammern an die Spreizklammern übergeben wird oder von Spreizklammern das Wäschestück aus den Beladeklammern übernommen wird. Weil die Vermessung des vorderen Rands, nämlich des vorderen Querrands, beim größeren oder vergrößerten Abstand der Beladeklammern erfolgt, indem diese einen zur Ausbildung des V-artigen Durchhangs ausreichend großen Abstand aufweisen, ist der vordere Querrand quasi schon anfänglich gestreckt oder vorgestreckt, aber in beiden Fällen noch nicht ganz und/oder ausreichend gestreckt. Wenn dann beim größeren Abstand der Beladeklammer die Übergabe oder Übernahme des Wäschestücks von der Spreizeinrichtung erfolgt, können die Spreizklammern derselben schon einen entsprechend größeren Abstand zueinander aufweisen, was den Verfahrweg der Spreizklammern zum Strecken des vorderen Rands des Wäschestücks verkürzt. Das verringert die Dauer des Spreizvorgangs.

Eine vorteilhafte Möglichkeit der Ausgestaltung des Verfahrens sieht es vor, dass die tiefste Stelle oder zumindest die annähernd tiefste Stelle des Durchhangs des vorderen Rands des von den einen größeren Abstand zueinander aufweisenden Beladeklammern herunterhängenden Wäschestücks berührungslos optoelektronisch gemessen wird. Das kann vorzugsweise durch eine bildgebende Einrichtung, wie zum Beispiel eine Kamera bzw. eine Zeilenkamera oder eine Sensorleiste oder einen Laserfächer bzw. einen Laservorhang erfolgen. Solche berührungslosen Messverfahren lassen sich rasch mit großer Zuverlässigkeit durchführen und liefern Daten, vorzugsweise digitale Daten, die eine automatische rechnerische Ermittlung der Breite bzw. Länge des vorderen Rands, insbesondere vorderen Querrands, des Wäschestücks aufgrund der berührungslos ermittelten tiefsten Stelle oder annähernd tiefsten Stelle des Durchhangs des von in den Beladeklammern herunterhängenden Wäschestücks zulassen.

Eine vorteilhafte Weiterbildungsmöglichkeit des Verfahrens sieht es vor, dass der Abstand der ermittelten tiefsten Stelle des V-artigen Durchhangs des vorderen Rands des Wäschestücks bei an den Beladeklammern hängendem Zustand zu einer gedachten geraden Verbindungslinie zwischen den benachbarten, jeweils eine der gegenüberliegenden Ecken des V-förmig durchhängenden vorderen Rands des Wäschestücks haltenden Beladeklammern, insbesondere des lichten oder äußeren Abstands derselben, ermittelt wird. Aus diesem Abstand lässt sich vor allem unter Einbeziehung des Abstands der beiden Beladeklammern die Länge des vorderen Rands des Wäschestücks automatische ermitteln. Es kann so unter Einbeziehung der bei der berührungslosen optoelektronischen Messung des Durchhangs des vorderen Rands des von den Beladeklammern herunterhängenden Wäschestücks vorzugsweise rechnerisch die Länge des vorderen Rands des von den Beladeklammern herunterhängenden Wäschestücks zuverlässig vor der Spreizeinrichtung ermittelt werden. Das gilt vor allem auch für größere Wäschestücke.

Es ist denkbar, dass der Abstand zwischen den beiden ein Beladeklammerpaar bildenden Beladeklammern der jeweiligen Beladestation beim Einhängen benachbarter Ecken des vorderen Rands des Wäschestücks kleiner ist als bei der noch im Bereich der jeweiligen Beladestation erfolgenden berührungslosen Ermittlung des V-artigen Durchhangs des vorderen Rands des Wäschestücks. Dadurch sind die Beladeklammern der jeweiligen Beladestation zum Einhängen benachbarter Ecken des Wäschestücks wie bisher üblich noch dicht zusammen, was gegebenenfalls das manuelle, aber auch automatisierte Einhängen benachbarter Ecken des vorderen Rands des Wäschestücks in die beiden Beladeklammern der jeweiligen Beladestation erleichtern kann. Dann werden die benachbarten Beladeklammern des jeweiligen Beladeklammerpaars nach dem Einhängen der benachbarten Ecken des vorderen Rands des Wäschestücks auseinandergefahren, und zwar so weit, dass ihr Abstand so sehr vergrößert ist, dass von den Beladeklammern der vordere Rand des Wäschestücks mit einem V-artigen Durchhang herunterhängt, also im Gegensatz zu sich dicht nebeneinander befindenden Beladeklammern der vordere Rand des Wäschestücks nicht mehr verschlungen ist. Nach dem bzw. durch das Auseinanderfahren der Beladeklammern hat sich dann ein V-artiger Durchhang ausgebildet, der die berührungslose Vermessung des noch durchhängenden, aber weniger als ursprünglich durchhängenden, vorderen Rands, vor allem seiner mindestens annähernd tiefesten Stelle zulässt.

Alternativ ist es aber auch denkbar, das Paar von Beladeklammern in der jeweiligen Beladestation mit einem fixen, unveränderlichen Abstand zueinander zu versehen. Dieser Abstand ist dann größer als bisher üblich, wodurch bei den an den Beladeklammern hängenden Wäschestücken, und zwar auch großen Wäschestücken, zuverlässig ein messbarer V-artiger Verlauf des Durchhangs des vorderen Rands des Wäschestücks vorhanden ist. Bei einem solchermaßen festen, größeren Abstand zwischen den Beladeklammern können diese Bestandteile einer Mehrfachklammer sein.

Das Eingeben bzw. Einhängen gegenüberliegender Ecken des vorderen Rands, insbesondere vorderen Querrands, des jeweiligen Wäschestücks in zwei Beladeklammern der betreffenden Beladestation kann durch eine oder mehrere Bedienungspersonen (manuell) erfolgen, aber auch ganz bzw. teilweise automatisiert bzw. mechanisiert, beispielsweise durch mindestens eine Handhabungseinrichtung, einen Roboter, Transporteinrichtungen oder dergleichen.

Gemäß einer vorteilhaften Ausgestaltungsmöglichkeit des Verfahrens ist es vorgesehen, an jeder Beladestation mehrere Beladeklammern zu einer Gruppe zusammenzufassen. Eine solche Gruppe kann nicht nur zwei gleiche Beladeklammern aufweisen, sondern auch mehr als zwei gleiche Beladeklammern. Eine solche Gruppe mehrerer Beladeklammern ist dann eine Mehrfachklammer mit zwei, drei oder auch mehr als drei Beladeklammern.

Eine Mehrfachklammer mit drei vorzugsweise gleichen Beladeklammern weist zwei äußere Beladeklammern und eine dazwischen angeordnete innere Beladeklammer auf. Die innere Beladeklammer kann mittig zwischen den äußeren Beladeklammern angeordnet sein, aber auch geringfügig außermittig. Bei einer solchen Mehrfachklammer können die gegenüberliegenden Ecken eines vorderen Rands des jeweiligen Wäschestücks wahlweise in die beiden äußeren Beladeklammern oder eine äußere und die innere Beladeklammer eingehängt werden. Insbesondere wird die innere Beladeklammer für kleinere Wäschestücke verwendet, beispielsweise Servietten, deren benachbarte Ecken eines Rands keinen so großen Abstand aufweisen wie die äußeren Beladeklammern. Bei mittiger Anordnung der inneren Beladeklammer zwischen den äußeren Beladeklammern ergeben sich zwei Wahlmöglichkeiten, weil die äußeren Beladeklammern gleich weit von der mittigen, inneren Beladeklammer entfernt sind. Wenn die innere Klammer außermittig zwischen den äußeren Klammern angeordnet ist, sind unterschiedliche Abstände zwischen den äußeren Beladeklammern und der inneren Beladeklammer gegeben.

Es kann weiterhin vorgesehen sein, das mindestens einer Beladeklammer jeder Gruppe mehrerer Beladeklammern der Mehrfachklammer ein Mittel zugeordnet ist, das feststellt, ob sich eine Ecke des Wäschestücks in der betreffenden Beladeklammer befindet. Wenn dieses Mittel ein Signal abgibt, bedeutet das ein Vorhandensein einer Ecke in der betreffenden Beladeklammer, während ein fehlendes Signal auf das Nichtvorhandensein einer Ecke in der betreffenden Beladeklammer hindeutet oder umgekehrt. Bei dem Mittel kann es sich um einen Kontakt, Taster, Sensor, Lichtschranke oder auch eine Kamera handeln. Bevorzugt ist es vorgesehen, dass jeder Beladeklammer, also allen Beladeklammern einer Mehrfachklammer, ein solches Mittel zugeordnet ist. Vor allem bei Mehrfachklammern mit drei oder mehr Beladeklammern kann durch das mindestens der inneren Beladeklammer zugeordnete Mittel zur Feststellung der Anwesenheit einer Ecke in dieser Beladklammer die Information gewonnenen werden, dass die innere Beladeklammer von einer Ecke eines Wäschestücks belegt ist, bei dem es sich um ein kleines Wäschestück handeln muss, dessen Rand kleiner ist als der Abstand der äußeren Beladeklammern. Dieses Signal kann die Steuerung dann dahingehend verarbeiten, dass ein kleines Wäschestück mit nur gering durchhängendem vorderen Rand in einer äußeren und inneren Beladeklammer gehalten ist. Aufgrund dieser Informationen kann dann die Ermittlung der Länge des vorderen Rands des Wäschestücks unterbleiben, weil davon auszugehen ist, dass der Spreizweg solcher kleiner Wäschestücke durch die Spreizeinrichtung nur gering ist.

Eine Vorrichtung zur Lösung der eingangs genannten Aufgabe weist die Merkmale des Anspruchs 8 auf. Bei dieser Vorrichtung ist es vorgesehen, die beiden Beladeklammern der oder der jeweiligen Beladestation mindestens zur Messung der Länge des durchhängenden vorderen Rands des Wäschestücks mit einem größeren Abstand zu versehen. Unter größerem Abstand ist ein solcher Abstand zu verstehen, der deutlich größer ist als der bisher übliche Abstand der Beladeklammern eines jeweiligen Beladeklammerpaars. Mindestens beträgt der größere bzw. vergrößerte Abstand der Beladeklammern jeder Beladestation das 1½-fache bis 3-fache der durchschnittlichen bisherigen Abstände von Beladeklammern bekannter Eingabemaschinen. Durch den größeren Abstand der Beladeklammern bildet sich unter den benachbarte Ecken der Vorderkante haltenden Beladeklammern auch bei großen Wäschestücken ein definierter V-artiger Durchhang aus. Dieser Durchhang, insbesondere die tiefste Stelle oder zumindest nahezu tiefste Stelle desselben, kann zuverlässig von einer Messeinrichtung, insbesondere optoelektronischen Messeinrichtung, berührungslos ermittelt, bevorzugt gemessen, werden. Daraus ist, vorzugsweise rechnerisch, die Länge des vorderen Rands, insbesondere vorderen Querrands, von Wäschestücken beliebiger Größe im Bereich der Beladestation, also vor der Spreizeinrichtung, zuverlässig und mit ausreichend genauen Messergebnissen automatisch ermittelbar.

Es ist eine Ausgestaltung der Vorrichtung denkbar, bei der die zwei benachbarte Ecken des jeweiligen Wäschestücks haltenden benachbarten Beladeklammern der oder jeder Beladestation einen festen Abstand zueinander aufweisen. Dieser Abstand ist gegenüber bisherigen Vorrichtungen dieser Art (Eingabemaschinen) vergrößert. Vorzugsweise ist der Abstand der Beladeklammern des jeweiligen, insbesondere jedes, Beladeklammerpaars so weit vergrößert, dass auch der Durchhang großer Wäschestücke eine definierte bzw. definierbare V-förmige Gestalt annimmt.

Bevorzugt beträgt der Abstand der beiden Beladeklammern des jeweiligen Beladeklammerpaars an der jeweiligen Beladestation 350 mm bis 600 mm. Besonders vorteilhaft ist ein Abstand von 400 mm bis 500 mm. Demgegenüber betrugen die lichten Abstände der beiden Beladeklammern jeder Beladestation bei bekannten Vorrichtungen durchschnittlich nur etwa 200 mm. Durch den mindestens 1,5-fach so großen lichten Abstand der Beladeklammern des jeweiligen Beladeklammerpaars wird erreicht, dass der zwischen gegenüberliegenden Ecken der Vorderkante sich ausbildende Durchhang des Wäschestücks auch bei großen Wäschestücken eine definierte, insbesondere V-förmige oder gegebenenfalls auch U-artige Gestalt aufweist. Ein Durchhang mit einer solchermaßen definierten Gestalt lässt sich berührungslos mit insbesondere optoelektronischen Mitteln zuverlässig und ausreichend exakt bestimmen. Vor allem lässt sich so die tiefste Stelle des Durchhangs oder zumindest annähernd tiefste Stelle des Durchhangs berührungslos zuverlässig und ausreichend genau ermitteln und/oder messen.

Es ist denkbar, dass die zwei benachbarte Ecken des jeweiligen Wäschestücks haltenden beiden Beladeklammern der jeweiligen Beladestation eine Doppelklammer bilden. Dann weisen die benachbarten Beladeklammern untereinander einen unveränderlichen, fixen Abstand auf. Dann geben Bedienungspersonen die gegenüberliegenden Ecken des vorderen Rands des Wäschestücks mit entsprechend größerem Abstand in die Beladeklammern ein. Es hat sich gezeigt, dass ein solches Einhängen der gegenüberliegenden Ecken des jeweiligen Wäschestücks in die Beladeklammern ergonomisch günstig ist, weil die jeweilige Bedienungsperson bei parallel ausgerichteten Armen die jeweiligen Ecken mit einem Abstand hält, der dem erfindungsgemäßen vergrößerten Abstand der Beladeklammern des jeweiligen Beladeklammerpaars entspricht oder zumindest annähernd entspricht. Die jeweilige Bedienungsperson braucht somit weder ihre Arme und Hände zusammenzubewegen noch weiter als ergonomisch angenehm auseinanderzubewegen, um die benachbarten Ecken des vorderen Rands des jeweiligen Wäschestücks in das Beladeklammerpaar der jeweiligen Beladestation einzuhängen.

Alternativ ist es aber auch denkbar, die Abstände der Beladeklammern der jeweiligen Beladestation veränderlich auszubilden. Dann ist mindestens eine Beladeklammer jeder Beladestation an einem Klammerkörper beweglich gelagert. Die Veränderung des Abstands der Beladeklammern des Beladeklammerpaars kann derart sein, dass der minimale Abstand kleiner als 350 mm ist und der maximale Abstand bis zu 600 mm, vorzugsweise bis zu 500 mm, beträgt. Dadurch kann beispielsweise der Abstand der Beladeklammern des jeweiligen Beladeklammerpaars zum Einhängen der den vorderen Querrand des jeweiligen Wäschestücks beidseitig begrenzenden Ecken in die Beladeklammern mit einem bisher üblichen kleineren Abstand erfolgen, während dieser Abstand nach dem Einhängen des Wäschestücks in die Beladeklammern, aber vor dem Messvorgang des Durchhangs des vorderen Rands, vergrößert wird auf den größeren Abstand, der das 1 34-fache bis 3-fache des geringen Abstands betragen kann. Es kann so die Vermessung des durchhängenden vorderen Rands bei einem nach dem Auseinanderfahren der Beladeklammern entstehenden größeren Abstand derselben sich bildenden V-artigen Durchhang zuverlässig erfolgen, während das Einhängen benachbarter Ecken der Vorderkante des Wäschestücks mit gewohntem kleineren Abstand der benachbarten Beladeklammern jedes Beladeklammerpaars untereinander erfolgen kann.

Eine vorteilhafte Weiterbildung der Vorrichtung weist die Merkmale des Anspruchs 11 auf. Demnach ist es vorgesehen, dass jede Beladestation wenigstens eine Gruppe mit mindestens drei Beladeklammern aufweist. Dadurch können benachbarte Ecken eines vorderen Rands eines jeweiligen Wäschestücks wahlweise in zwei ausgesuchten Beladeklammern der Gruppe aus wenigstens drei Beladeklammern eingehängt werden. Da die wenigstens drei Beladeklammern der jeweiligen Gruppe mindestens zum Teil unterschiedliche Abstände zueinander aufweisen, lassen sich kleinere Wäschestücke in weniger beabstandete Beladeklammern, vorzugsweise eine äußere und die innere Bekladeklammer, einhängen, während größere Wäschestücke mit den gegenüberliegenden Ecken ihres vorderen Rands in einen maximalen Abstand zueinander aufweisende äußere Beladeklammern einhängbar sind.

Bevorzugt sind die Beladeklammern der jeweiligen Gruppe an einer Mehrfachklammer angeordnet oder sie bilden eine solche. Vorzugsweise sind die Beladeklammern der Mehrfachklammer miteinander verbunden. Eine solche Verbindung kann fest erfolgen, so dass die Abstände der Beladeklammern der jeweiligen Gruppe untereinander nicht veränderbar sind.

Gemäß einer vorteilhaften Ausgestaltung der Vorrichtung verfügt die jeweilige Mehrfachklammer über zwei äußere Beladeklammern und mindestens eine dazwischen angeordnete innere Beladeklammer. Wenn die Mehrfachklammer drei vorzugsweise gleiche Beladeklammern aufweist, kann die innere Beladeklammer mittig zwischen den äußeren Klammern angeordnet sein, aber auch außermittig. Bei außermittig angeordneter innerer Beladeklammer weisen die äußeren Beladeklammern den größten Abstand zueinander auf, während die innere Beladeklammer zu den äußeren Beladeklammern unterschiedlich große Abstände aufweist, indem zu einer äußeren Beladeklammer die innere Beladeklammer einen anderen Abstand aufweist als zur anderen äußeren Beladeklammer. Dadurch lassen sich verschieden große Wäschestücke mit gegenüberliegenden Ecken eines vorderen Rands in ausgewählten Beladeklammern der Mehrfachklammer einhängen, insbesondere auch kleine Wäschestücke in die Mehrfachklammer einhängen, deren Abstand benachbarter Ecken des vorderen Rands kleiner ist als der Abstand der äußeren Beladeklammern.

Es ist denkbar, dass die oder jede innere Beladeklammer verschieblich der Mehrfachklammer zugeordnet ist. Dann ist es möglich, die Abstände der jeweiligen inneren Beladeklammer zu den äußeren Beladeklammern bedarfsgerecht zu verändern.

Bevorzugte Ausführungsbeispiele der Erfindung werden nachfolgend anhand der Zeichnung näher erläutert. In dieser zeigen:
- Fig. 1: eine perspektivische Ansicht einer Vorrichtung gemäß einem ersten Ausführungsbeispiel,
- Fig. 2: eine Seitenansicht der Vorrichtung der Fig. 1,
- Fig. 3: eine Vorderansicht der Vorrichtung der Fig. 1,
- Fig. 4: eine Vorderansicht einer Beladestation der Vorrichtung der Fig. 1 bis 3 mit einem Beladeklammerpaar aus zwei gemäß dem Stand der Technik dicht nebeneinander angeordneten Beladeklammern,
- Fig. 5: eine Ansicht gemäß der Fig. 4 mit zwei erfindungsgemäß einen größeren Abstand zueinander aufweisenden Beladeklammern,
- Fig. 6: eine Seitenansicht der Beladestation gemäß der Fig. 5 mit einer Messeinrichtung zur Ermittlung einer tiefsten Stelle eines Durchhangs des an einen größeren Abstand aufweisenden Beladeklammern hängenden Wäschestücks,
- Fig. 7: eine Ansicht analog zur Fig. 5 mit einem alternativen Ausführungsbeispiel mit jeweils drei zu einer Gruppe zusammengefassten Beladeklammern, und
- Fig. 8: eine perspektivische Ansicht einer Vorrichtung gemäß einem anderen Ausführungsbeispiel.

Die Figuren zeigen eine als Eingabemaschine 9 ausgebildete Vorrichtung. Die Vorrichtung bzw. Eingabemaschine 9 dient dazu, in einigen Figuren gezeigte Wäschestücke 10, und zwar insbesondere unsortiert aufeinanderfolgende Wäschestücke 10 verschiedener Größe, auszubreiten und im ausgebreiteten Zustand einer in den Figuren nicht gezeigten Mangel oder einer sonstigen Wäschebehandlungseinrichtung, beispielsweise einer Faltmaschine, zuzuführen.

Bei den Wäschestücken 10 handelt es sich bevorzugt um sogenannte Flachwäschestücke. Dabei kann es sich um Bettwäsche, vor allem Bettbezüge, Kopfkissenbezüge und Bettlaken, aber auch Tischwäsche, wie beispielsweise Tischdecken, Platzdecken und Servietten handeln.

Die Mangel oder eine sonstige Wäschebehandlungseinrichtung sind in Zuführrichtung 11 gesehen hinter der Eingabemaschine 9 angeordnet. Die Eingabemaschine 9 verfügt über mindestens einen von einem Gurtförderer gebildeten Zuführförderer 12, der ein jeweils ausgebreitetes Wäschestück 10 oder bei mehrbahnig ausgebildeten Vorrichtungen auch mehrere kleinere Wäschestück 10 nebeneinanderliegend mehrbahnig in Zuführrichtung 11 zur Mangel oder einer sonstigen Wäschebehandlungsmaschine transportiert.

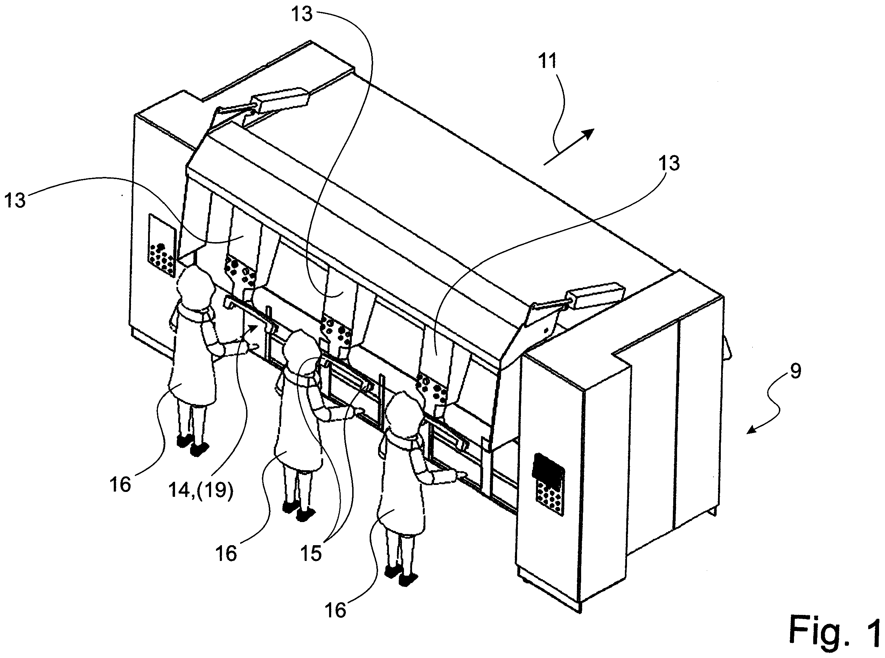

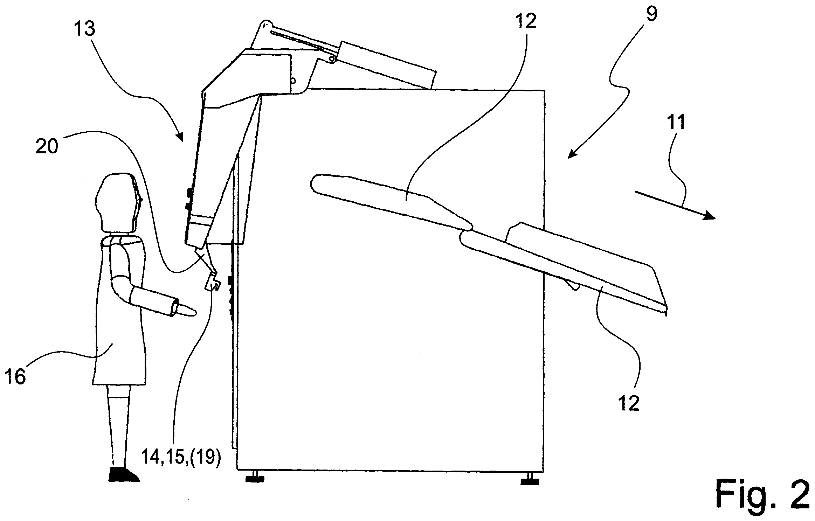

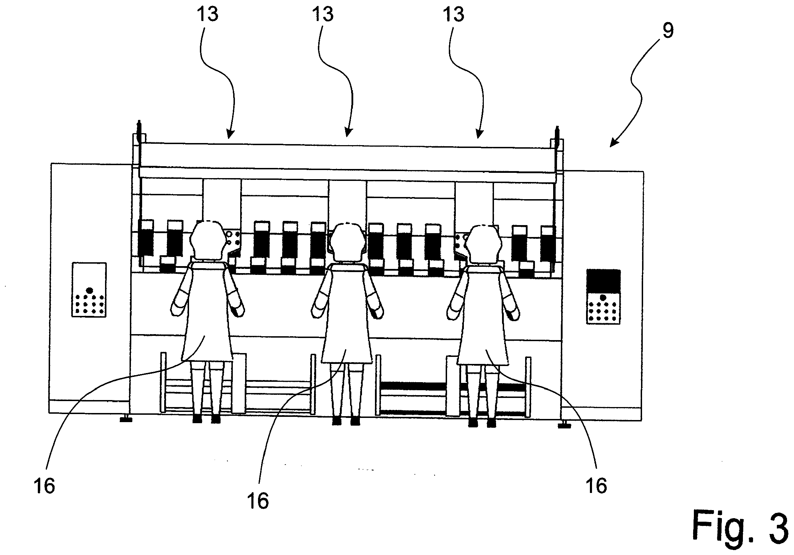

An einer Vorderseite bzw. vor der Vorrichtung sind mehrere vorzugsweise gleiche Beladestationen 13 angeordnet. Die in den Fig. 1 bis 6 gezeigte Vorrichtung verfügt über drei gleichermaßen voneinander beabstandete Beladestationen 13. Hierauf ist die Erfindung aber nicht beschränkt. Die Vorrichtung kann mehr als drei oder auch weniger als drei Beladestationen 13 aufweisen, gegebenenfalls auch nur eine einzige Beladestation 13.

Jede der vorzugsweise gleichen Beladestationen 13 verfügt über ein Beladeklammerpaar 14 mit zwei bevorzugt gleichen Beladeklammern 15. Jeder Beladestation 13 ist bei der in den Figuren gezeigten Vorrichtung eine Bedienungsperson 16 zugeordnet. Die Bedienungsperson 16 gibt gegenüberliegende bzw. benachbarte Ecken 17 eines vorderen Rands 18 des jeweiligen Wäschestücks 10 in eine der beiden Beladeklammern 15 des Beladeklammerpaars 14 derjenigen Beladestation 13, vor der sie sich momentan befindet. Die benachbarten Ecken 17 des vorderen Rands 18 des jeweiligen Wäschestücks 10 werden dazu in die Beladeklammern 15 eingehängt, so dass das Wäschestück 10 mit den Ecken 17 an den beiden Beladeklammern 15 des Beladeklammerpaars 14 hängt.

Die in den Fig. 1 bis 6 gezeigten Beladeklammern 15 sind mit festem, unveränderlichem Abstand zu einer Mehrfachklammer zusammengefasst, bei der es sich in diesem Ausführungsbeispiel um eine Doppelklammer 19 handelt. Die Beladeklammern können alternativ aber auch getrennt sein. Die beiden Beladeklammern 15 des Beladeklammerpaars 14 bzw. die Doppelklammer 19 werden von einem Schlitten 20 getragen, der von einem Förderer der jeweiligen Beladestation 13 unter Mitnahme des Beladeklammerpaars 14 bzw. der Doppelklammer 19 auf einer bezogen auf die Zuführrichtung 11 ansteigenden Bahn verfahrbar ist. Beim Förderer kann es sich um einen Stetigförderer, mit beispielsweise einen umlaufenden Fördergurt, Riemen, Kette oder dergleichen handeln, aber auch einen Unstetigförderer, beispielsweise einen Shuttlezylinder, der den Schlitten 20 mit dem Beladeklammerpaar 14 bzw. der Doppelklammer 19 in entgegengesetzten Richtungen auf- und abbewegt.

Von der in den Fig. 1 bis 6 gezeigten Beladestellung der Beladeklammern 15 der Beladestation 13 wird der Schlitten 20 mit den ihm zugeordneten Beladeklammern 15 bzw. Doppelklammern 19 hochgefahren in eine Übergabestellung der benachbarten Ecken 17 des vorderen Rands 18 des Wäschestücks 10 zu einer in Zuführrichtung 11 gesehen hinter den Beladestationen 13 angeordneten (nicht gezeigten) Spreizeinrichtung. Die Spreizeinrichtung verfügt über mindestens ein (ebenfalls in den Figuren nicht dargestelltes) Spreizklammerpaar aus mehreren vorzugsweise gleichen Spreizklammern. Bei einer Spreizeinrichtung mit einem Spreizklammerpaar bedient dieses alle drei Beladestationen 13 abwechselnd. Es ist aber auch denkbar, dass die Spreizeinrichtung mehrere Spreizklammerpaare aufweist. Die Spreizklammern eines Spreizklammerpaars sind auf einer quer zur Zuführrichtung 11 verlaufenden, horizontalen Bahn, vorzugsweise einer Schiene, unabhängig voneinander über die gesamte Arbeitsbreite der Vorrichtung verfahrbar. Die hinter einer jeweiligen Beladestation 13 zusammengefahrenen Spreizklammern übernehmen die benachbarten Ecken 17 des vorderen Rands 18 des jeweiligen Wäschestücks 10 aus den hochgefahrenen Beladeklammern 15 der jeweiligen Beladestation 13. Es ist aber auch denkbar, dass die Ecken von den beiden Beladeklammern 15 des jeweiligen Beladeklammerpaars 14 in die beiden Spreizklammern des Spreizklammerpaars eingeschoben werden.

Nachdem die Spreizklammern benachbarte Ecken 17 des quer zur Zuführrichtung 11 verlaufenden vorderen Rands 18 des Wäschestücks 10 übernommen haben, werden die Spreizklammern von einem entsprechenden Antrieb der Spreizeinrichtung gegensinnig auseinandergefahren zum Ausstrecken des vorderen Rands 18 des Wäschestücks 10. Das hat ein Ausbreiten des Wäschestücks 10 zur Folge. Außerdem werden die Spreizklammern des jeweiligen Spreizklammerpaars so verfahren, dass das jeweilige Wäschestück bei einbahnig betriebener Mangel oder einer sonstigen Wäschereimaschine mittig vor dem Zuführförderer 12 positioniert ist. Bei mehrbahnig betriebenen Mangeln oder sonstigen Wäschereimaschinen verfahren die Spreizklammern das jeweilige kleinere Wäschestück mittig vor die jeweilige Bahn.

Nachdem die Spreizklammern das jeweilige Wäschestück 10 ausgebreitet und mittig vor die jeweilige Bahn des Zuführförderers 12 gefahren haben, wird ein vorderer Randbereich des Wäschestücks 10 mit dem von den Spreizklammern ausgestreckten vorderen Rand 18 entweder direkt auf den Zuführförderer 12 aufgelegt oder indirekt auf eine Ablegeleiste aufgelegt, die anschließend den vorderen Randbereich des Wäschestücks auf den Zuführförderer 12 ablegt.

In erfindungsgemäß besonderer Weise ist der Abstand der Beladeklammern 15 des Beladeklammerpaars 14 bzw. der Doppelklammer 19 so groß ausgebildet, dass der vordere Rand 18 des jeweiligen Wäschestücks 10 an der betreffenden Beladestation 13 berührungslos, insbesondere optoelektronisch, vermessen werden kann. Diese Vermessung findet bei in benachbarten Beladeklammern 15 des Beladeklammerpaars 14 hängenden gegenüberliegenden Ecken 17 des vorderen Rands 18 des jeweiligen Wäschestücks 10 statt. Dabei hängt der vordere Rand 18 des Wäschestücks 10 noch durch.

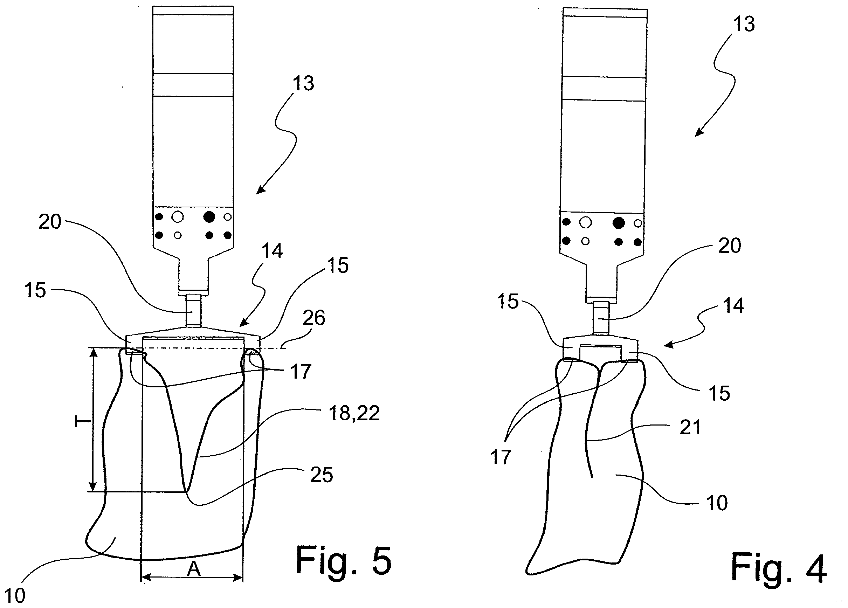

Die Fig. 4 zeigt die gemäß dem Stand der Technik einen nur geringen Abstand zueinander aufweisenden Beladeklammern 15 des jeweiligen Beladeklammerpaars 14 bzw. der Doppelklammre 19. Die Fig. 4 lässt erkennen, dass bei in den Beladeklammern 15 hängenden Ecken 17 an gegenüberliegenden Enden des vorderen Rands 18 der zwischen den dicht beieinander liegenden Beladeklammern 15 sich bildende Durchhang 21 des vorderen Rands 18 des Wäschestücks 10 nicht erkennbar ist, weil die Beladeklammern 15 so dicht zusammen sind, dass die von gegenüberliegenden Beladeklammern 15 ausgehenden Teile des Durchhang 21 sich überlappen und/oder ineinander verschlungen sind. Der Durchhang 21 ist dadurch quasi nicht vorhanden. Deshalb kann dieser Durchhang 21 zumindest nicht berührungslos vermessen werden.

Die Fig. 1 und 5 zeigen im Vergleich dazu das Beladeklammerpaar 14 bzw. die Doppelklammer 19 mit erfindungsgemäß vergrößertem Abstand, insbesondere vergrößertem lichten Abstand, der beiden Beladeklammern 15. Es ist erkennbar aus der Fig. 5, dass wegen des vergrößerten Abstands der Beladeklammern 15 des Beladeklammerpaars 14 der jeweiligen Beladestation 13 die in den Beladeklammern 18 gehaltenen gegenüberliegenden Ecken 17 des vorderen Rands 18 des Wäschestücks 10 einen größeren Abstand zueinander aufweisen. Infolge dessen bildet sich vor allem auch bei größeren Wäschestücken 10 ein deutlich erkennbarer V-artiger, vorzugsweise V-förmiger, Durchhang 22 des vorderen Rands 18 zwischen den einen vergrößerten Abstand zueinander aufweisenden Beladeklammern 15 gehaltenen Ecken 17 des vorderen Rands 18 des Wäschestücks 10 aus. Dieser vordere Rand 18 kann zuverlässig und relativ genau berührungslos, insbesondere optoelektronisch, ermittelt werden.

Während der in der Fig. 4 gezeigte bisher übliche geringe Abstand der Beladeklammern 15 des jeweiligen Beladeklammerpaars 14 bzw. der Doppelklammer 19 im Bereich von 150 mm bis 250 mm liegt, beträgt der in den Fig. 1 und 5 dargestellte erfindungsgemäß größere Abstand, insbesondere lichte Abstand, 350 mm bis 600 mm, bevorzugt 400 mm bis 500 mm. Folglich ist der erfindungsgemäß vergrößerte Abstand der benachbarten Beladeklammern 15 etwa 1,5- bis 4-fach so groß wie der bisher übliche Abstand.

Den Beladeklammern 15 können in den Figuren nicht gezeigte Mittel zur Feststellung der Belegung der jeweiligen Beladeklammer 15 zugeordnet sein. Insbesondere dienen die Mittel dazu, festzustellen, ob in der jeweiligen Beladeklammer 15 eine Ecke 17 des jeweiligen Wäschestücks 10 sich befindet oder nicht. Beispielsweise erzeugt das Mittel ein Signal, wenn die jeweilige Beladeklammer 15 eine Ecke 17 aufweist. Ein fehlendes Signal deutet auf eine freie Beladeklammer 15 hin. Das Mittel zur Feststellung der Belegung der jeweiligen Beladeklammer 15 kann verschiedenartig ausgebildet sein, beispielsweise als ein Schalter, ein Taster, ein Sensor, eine Lichtschranke oder eine Kamera.

Wird nach dem Eingeben einer Ecke 17 in mindestens eine Beladeklammer 15 ein Signal erzeugt, kann beispielsweise eine Steuerung der Vorrichtung dazu verwendet werden, den Messvorgang der Länge bzw. der Breite des vorderen Rands 18 des Wäschestücks zu starten. Bevorzugt ist es vorgesehen, jeder Beladeklammer 15 des Beladeklammerpaars 14 bzw. der Doppelklammer 19 ein Mittel zum Erfassen der Belegung und/oder Nichtbelegung der jeweiligen Beladeklammer 15 zuzuordnen. Dann ist es zweckmäßigerweise vorgesehen, dass erst dann der nächste Schritt, beispielsweise die Messung der Länge bzw. der Breite des vorderen Rands 18 gestartet wird, wenn die Mittel beider Beladeklammern 15 das Vorhandensein einer Ecke 17 des vorderen Rands 18 detektieren.

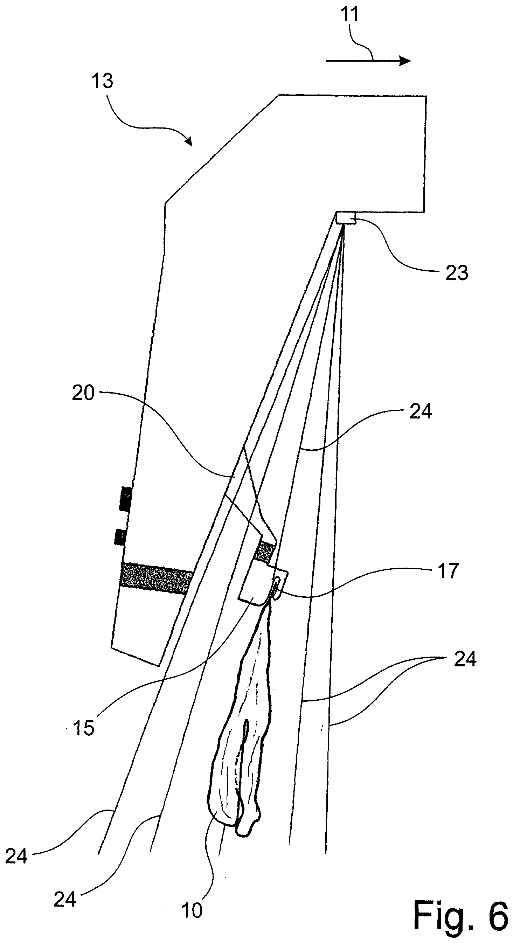

In der Fig. 6 ist eine berührungslos arbeitende bzw. messende Messeinrichtung 23 dargestellt. Diese befindet sich hinter dem Förderer zum Auf- und Abbewegen des das Beladeklammerpaar 14 bzw. die Doppelklammer 19 tragenden Schlittens 20. Dadurch befinden sich die Beladeklammern 15 der jeweiligen Beladestation 13 mit dem daran hängenden Wäschestück 10 im Einflussbereich der berührungslosen Messeinrichtung 23. Die gezeigte berührungslose Messeinrichtung 23 weist mindestens ein optoelektronsiches Messmittel auf, das einen Laservorhang mit in einer vertikalen, in Zuführrichtung 11 vorzugsweise mittig zwischen den beiden Beladeklammern 15 verlaufenden Ebene aus einer Vielzahl von Laserstrahlen 24 bildet. Gegebenenfalls kann die berührungslose Messeinrichtung 23 um eine in Zuführrichtung 11 verlaufende horizontale Achse verschwenkbar sein, wodurch die Ebene aus einer Vielzahl von Laserstrahlen 24 gegenüber der Vertikalen leicht verschwenkbar ist, um eine eventuell nicht mittig zwischen den benachbarten Beladeklammern 15 sich befindende tiefste Stelle 25 des Durchhangs 22 des vorderen Rands 18 des Wäschestücks 10 detektieren zu können.

Es sind statt des Laservorhangs andere berührungslose Messmittel denkbar, beispielsweise eine vertikale Laserleiste oder eine Sensorleiste vor und/oder hinter dem von den zwei Beladeklammern 15 der jeweiligen Beladestation 19 herunterhängenden Wäschestück 10. Von der Sensorleiste ausgehende Sensorstrahlen sind dann im Wesentlichen senkrecht zur Darstellungsebene der Fig. 5, also auf die Vorder- oder Rückseite des an den beiden Beladeklammern 15 hängenden Wäschestücks 15 gerichtet, um so die tiefste Stelle 25 des Durchhangs 22 des vorderen Rands 18 des Wäschestücks 10 ermitteln zu können. An der Stelle der Sensorleiste kann auch eine Zeilenkamera vorgesehen sein. Auch ist es denkbar, ein Sensorarray oder eine mindestens zweidimensionale, vorzugsweise digitale, Kamera vorzusehen. Solche berührungslosen Messeinrichtungen können auch auf die Vorder- und/oder Rückseite des von den Beladeklammern 15 an der jeweiligen Beladestation 13 herunterhängenden Wäschestücks 18 gerichtet sein. Eine Kamera kann aber auch zwischen den beiden Beladeklammern 15 des Beladeklammerpaars 14 oberhalb des durchhängenden vorderen Rands 18 des Wäschestücks 10 angeordnet sein, so dass sie von oben auf die tiefste Stelle 25 oder mindestens annähernd die tiefste Stelle 25 des V-artigen Durchhangs 22 des vorderen Rands 18 des Wäschestücks 10 gerichtet ist.

Es ist ein alternatives, nicht gezeigtes Ausführungsbeispiel der Erfindung denkbar, bei dem der Abstand der beiden Beladeklammern 15 des Beladeklammerpaars 14 nicht gemäß dem Ausführungsbeispiel der Fig. 5 unveränderlich ist, sondern veränderbar. Der Abstand der beiden Beladeklammern 15 des jeweiligen Beladeklammerpaars 14 ist beispielsweise veränderbar durch Linearantriebe, die beide Beladeklammern 15 nach Art der Spreizklammern gegensinnig zusammen- oder auseinanderfahren. Es ist aber auch denkbar, nur eine Beladeklammer 15 des Beladeklammerpaars 14 verschiebbar auszubilden, um den Abstand der Beladeklammern 15 zu vergrößern oder zu verkleinern. Bei veränderlichem Abstand der Beladeklammern 15 des jeweiligen Beladeklammerpaars 14 wird zweckmäßigerweise das jeweilige Wäschestück 10 in zusammengefahrenen und dadurch einen wie bisher üblich geringen Abstand aufweisenden Beladeklammern 15 in dieselben von der jeweiligen Bedienungsperson 16 oder auch automatisch bzw. mechanisiert eingehängt. Im Anschluss daran werden die Beladeklammern 15 auf den in der Fig. 5 gezeigten größeren Abstand auseinandergefahren, bis der Durchhang 22 beispielsweise die in der Fig. 5 dargestellte V-artige Gestalt erhält, um dann berührungslos, insbesondere optoelektronisch, die tiefste Stelle 25 oder wenigstens annähernd die tiefste Stelle 25 am unteren Scheitelpunkt des Durchhangs 22 zu ermitteln.

Nachfolgend wird das erfindungsgemäße Verfahren unter Bezugnahme auf die als Eingabemaschine 9 ausgebildete Vorrichtung der Fig. 1 bis 6 und die vorstehende Beschreibung näher erläutert:
Bei diesem Verfahren findet die Ermittlung der Breite des quer zur Zuführrichtung 11 verlaufenden vorderen Rands 18 des Wäschestücks 10 schon im Bereich der jeweiligen Beladestation 13, also noch vor der Spreizeinrichtung, statt. Dazu verfügen die beiden Beladeklammern 15 des Beladeklammerpaars 14 jeder Beladestation 13 über einen gegenüber bisherigen Vorrichtungen, nämlich Eingabemaschinen 9, vergrößerten Abstand, insbesondere vergrößerten lichten Abstand. Dieser Abstand ist in der Fig. 5 dargestellt als Abstand A.

Es wird berührungslos, insbesondere optoelektronisch, von der berührungslosen Messeinrichtung 23 die tiefste Stelle 25 oder annähernd die tiefste Stelle 25 des Durchhangs 22 berührungslos ermittelt. Dabei werden vorzugsweise digitale Daten von mindestens der Position der tiefsten Stelle 25 oder in der Nähe derselben erhalten und in Relation gesetzt zu einer gedachten Verbindungslinie 26, insbesondere horizontalen Verbindungslinie 26, die quer zur Zuführrichtung 11 durch die Klammermäuler der beiden Beladeklammern 15 des jeweiligen Beladeklammerpaars 14 bzw. der Doppelklammer 19 verläuft. Diese Verbindungslinie 26 erstreckt sich bevorzugt durch die halbe Tiefe der Klammermäuler der beiden Beladeklammern 15. Aus dem Abstand der tiefsten Stelle 25 des Durchhangs 22 des vorderen Rands 18 oder mindestens in der Nähe der tiefsten Stelle 25 zur horizontalen Verbindungslinie 26 ergibt sich ein Tiefenmaß des Durchhangs 22 zum Zeitpunkt der berührungslosen Ermittlung dieser tiefsten Stelle 25 oder wenigstens der annähernd tiefsten Stelle 25. Dieses Tiefenmaß T ist in der Fig. 5 dargestellt. Aus dem bekannten vergrößerten Abstand, und zwar dem lichten Abstand oder dem Mittenabstand der Beladeklammern 15 des Beladeklammerpaars 14 der jeweiligen Beladestation 13, wird rechnerisch die Länge des vorderen Rands 18 des Wäschestücks 10 mindestens annähernd errechnet.

Anhand der vor dem Ausstrecken des vorderen Rands 18 des Wäschestücks 10 durch die Spreizklammern der Spreizeinrichtung im Bereich der jeweiligen Beladestation 13 ermittelten Länge des vorderen Rands 18 des Wäschestücks 10 können die Spreizklammern zum Ausbreiten des vorderen Rands 18, insbesondere vorderen Querrands, des Wäschestücks 10 gezielt auseinandergefahren werden und das Wäschestück 10 vor der einzigen Bahn bzw. der jeweiligen Bahn der Mangel oder einer sonstigen Wäschebehandlungsmaschine zentrieren.

Falls kein konstanter größerer Abstand der Beladeklammern 15 des jeweiligen Beladeklammerpaars 14 vorgesehen ist, sondern ein veränderbarer Abstand der Beladekammern 15, können die benachbarten Ecken 25 des vorderen Rands 18 eines jeweiligen Wäschestücks 10 in die in bisheriger Weise dicht nebeneinander sich befindenden Beladeklammern 15 eingehängt werden. Vor der Messung der tiefsten Stelle 25 des Wäschestücks 10 wird dann der Abstand der beiden Beladeklammern 15 vergrößert, so dass sie den Abstand A aufweisen. Dabei entsteht vor der berührungslosen Messung der tiefsten Stelle 25 der dazu erforderliche V-artige Durchhang 22 des noch nicht gestreckten vorderen Rands 18. Daraufhin kann dann die Messung der tiefsten Stelle 25 und die danach erfolgende Berechnung der Länge oder mindestens der annähernden Länge des vorderen Rands 18 des jeweiligen Wäschestücks 10 in vorstehend beschriebener Weise automatisch vor der Spreizeinrichtung erfolgen.

Das jeweilige Wäschestück 10 lässt sich von der betreffenden Bedienungsperson 16 bequem und ermüdungsfrei in die einen vergrößerten Abstand aufweisenden Beladeklammern 15 einhängen, weil der vergrößerte Abstand der Beladeklammern 15 etwa dem Abstand der die benachbarten Ecken 17 des vorderen Rands 18 haltenden Hände bei parallelen Armen der Bedienungsperson 16 entspricht.

Das Verfahren eignet sich besonders für unsortiert zu behandelnde Wäschestücke 10, und zwar sowohl große als auch kleine Wäschestück 10. Dabei kann auch die tiefste Stelle 25 des Durchhangs des vorderen Rands 18 größerer bzw. größter Wäschestück 10, sogenannte King-Size-Wäschestücke 10, zuverlässig berührungslos, insbesondere optoelektronisch, ermittelt werden, bevor die Spreizeinrichtung den vorderen Rand 18 des Wäschestücks 10 ausstreckt und es dabei zu einem Ausbreiten des Wäschestücks 10 kommt.

Infolge des vergrößerten Abstands der Beladeklammern 15 des jeweiligen Beladeklammerpaars 14 bzw. der Doppelklammer 16 findet ein Vorausbreiten des Wäschestücks 10 statt. Die benachbarten Ecken 17 des vorderen Rands 18 des Wäschestücks 10 gelangen dann mit einem größeren Abstand in die Spreizklammern 18, wodurch die Spreizklammern 18 zum Verringern des Durchhangs des vorderen Rands 18 und das dabei erfolgende Ausstrecken bzw. Spreizen desselben weniger weit auseinandergefahren werden müssen, was den Vorgang des Spreizens und Ausbreitens des jeweiligen Wäschestücks 10 verkürzt.

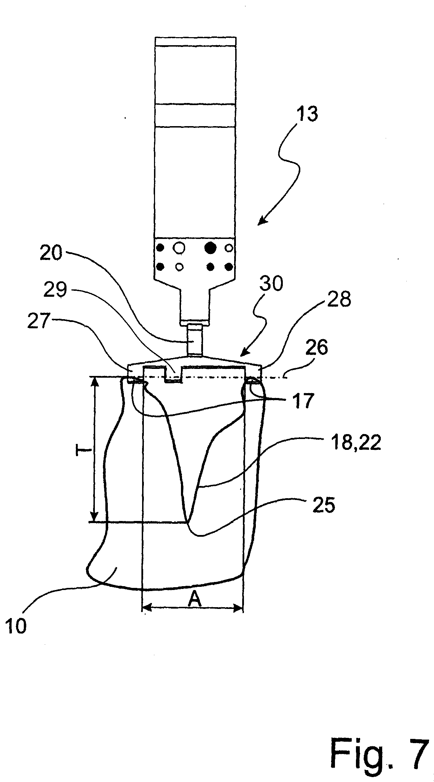

Die Darstellung der Fig. 7 entspricht derjenigen der Fig. 5. Jedoch zeigt die Fig. 7 ein alternatives Ausführungsbeispiel der Erfindung mit einer anders ausgebildeten Beladeklammer 27. Im Übrigen entspricht dieses Ausführungsbeispiel demjenigen der Fig. 1 bis 6. Soweit im Folgenden nichts anderes angegeben ist, entspricht die Beschreibung zum Ausführungsbeispiel der Fig. 1 bis 6 derjenigen der Fig. 7. Demzufolge enthält die Fig. 7 für gleiche Teile dieselben Bezugsziffern, die auch die Fig. 1 bis 6 enthalten.

Die Beladeklammer 27 verfügt über drei vorzugsweise gleich ausgebildete Beladeklammern 27, 28 und 29. Die drei Beladeklammern 27, 28 und 29 sind zu einer Gruppe zusammengefasst und untereinander fest verbunden zur Bildung einer Mehrfachklammer, nämlich einer Dreifachklammer 30. Dadurch sind die Abstände der Beladeklammern 27, 28 und 29 untereinander festgelegt, also nicht veränderbar.

Der Abstand "A" zwischen den beiden äußeren Beladeklammern 27, 28 kann so groß sein wie der Abstand A zwischen den Beladeklammern 15 der in den Fig. 1 und 5 dargestellten Doppelklammern 19. Wegen der dritten inneren Beladeklammer 29 zwischen den äußeren Beladeklammern 27 und 28 ist es aber möglich, den Abstand A zwischen den äußeren Beladeklammern 27, 28 bei der in der Fig. 7 gezeigten Dreifachklammer 30 zu vergrößern, und zwar auf bis zum 1 34-fachen des Abstands A der Fig. 5. Bei der gezeigten Dreifachklammer 30 befindet sich die innere Beladeklammer 29 außermittig zwischen den beiden äußeren Beladeklammern 27 und 28. Dadurch entsteht ein außermittiger Versatz der inneren Beladeklammer 29, der so groß sein kann wie in der Fig. 7 dargestellt, aber auch geringer, so dass die innere Beladeklammer 29 nur geringfügig aus der Mitte zwischen den äußeren Klammern 27 und 28 versetzt ist. Alternativ ist es auch denkbar, die innere Beladeklammer 29 mittig zwischen den äußeren Beladeklammern 27 und 28 anzuordnen. Dann wäre die innere Beladeklammer 29 eine mittlere Beladeklammer 29.

Es ist vorteilhaft, wenn wenigstens die innere Beladeklammer 29 der Dreifachklammer 30, vorzugsweise aber alle drei Beladeklammern 27, 28 und 29, ein Mittel zur Detektion des Vorhandenseins oder Nichtvorhandenseins einer Ecke 17 des vorderen Rands 18 des Wäschestücks 10 in der jeweiligen Beladeklammer 27, 28 und 29 aufweist.

Aufgrund der inneren oder gegebenenfalls mittigen Beladeklammer 29 können in die Dreifachklammer 30 auch kleine Wäschestücke, beispielsweise Servietten, eingehängt werden, bei denen der Abstand benachbarter Ecken 17 des vorderen Rands 18 so klein ist, dass die benachbarten Ecken 17 nicht mehr in die äußeren Beladeklammern 27, 28 einhängbar sind, indem sie beispielsweise einen Abstand aufweisen, der kleiner als der Abstand A ist. Dann lassen sich solche kleineren Wäschestücke 10 in die Beladeklammern 28 und 29 einhängen, deren Abstand etwas größer ist als der Abstand zwischen den Beladeklammern 27 und 29. Noch kleinere Wäschestücke, die sich nicht in die Beladeklammern 28 und 29 einhängen lassen, können infolge der Außermittigkeit der inneren Beladelammer 29 in die Beladeklammer 29 und die geringer davon beabstandete äußere Beladeklammer 27 einhängen.

Durch die drei Beladeklammern 27, 28, 29 ist es somit möglich, Wäschestücke 10 unterschiedlicher Größen, insbesondere auch relativ kleine Wäschestücke 10, durch Auswahl der geeigneten Beladeklammer 27, 28 oder 28, 29 oder 27,29 in die Dreifachklammer 30 einzuhängen. Durch die den Beladeklammern 27, 28 und 29, vorzugsweise alle drei Beladeklammern 27, 28 und 29, zugeordneten Detektionsmittel lässt sich ermitteln, in welchen Beladeklammern 27, 28 und/oder 29 das jeweilige Wäschestück 10 mit benachbarten Ecken 17 des vorderen Rands 18 hängt. Wenn beispielsweise festgestellt wird, dass das betreffende Wäschestück 10 in der inneren Beladeklammer 29 und einer der äußeren Beladeklammern 27 bzw. 28 oder beiden äußeren Beladeklammern 27, 28 hängt, können dadurch Rückschlüsse auf die Größe des Wäschestücks 10 gezogen werden. Gegebenenfalls kann dann, wenn es sich um kleinere Wäschestücke 10 handelt, die mit einer Ecke 17 in eine innere Klammer 29 eingehängt sind oder eingehängt werden müssen, ein Rückschluss auf die Größe des Wäschestücks 10 gezogen werden. Dabei wird davon ausgegangen, dass Wäschestücke 10, deren eine Ecke 17 in die innere Klammer 29 eingehängt werden muss, einen kurzen vorderen Rand 18 aufweisen, dessen Länge zum raschen Ausbreiten von der Spreizeinrichtung nicht vor der Übergabe an die Spreizklammern der Spreizeinrichtung vermessen werden muss. Es kann sich dann eine Vermessung des vorderen Rands 18 des jeweiligen Wäschestücks 10 auf in die äußeren Beladeklammern 27 und 28 eingehängte größere Wäschestücke 10 beschränken.

Das Verfahren läuft mit Dreifachklammern 30 prinzipiell genauso ab, wie bei Doppelklammern 19. Hinsichtlich der verfahrensgemäßen Gemeinsamkeiten wird auf das im Zusammenhang mit dem Ausführungsbeispiel der Fig. 1 bis 6 Beschriebene Bezug genommen. Bei der Dreifachklammer 30 ist keine Vermessung der Länge bzw. Breite des vorderen Rands 18 solcher Wäschestück 10 erforderlich, deren eine Ecke 17 in eine innere Beladeklammer 29 eingehängt ist, was durch Mittel zur Feststellung der Belegung ermittelt wird.

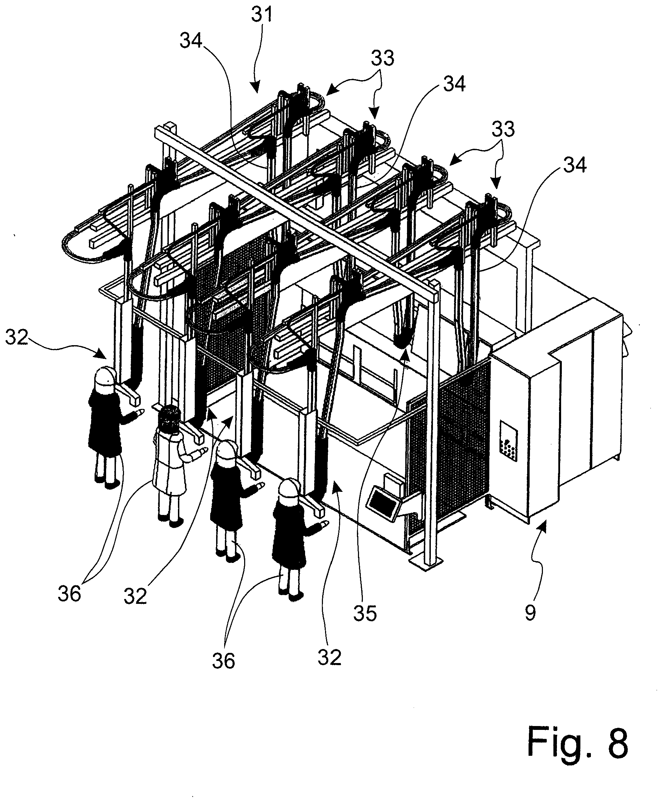

Die Fig. 8 zeigt ein Ausführungsbeispiel der Vorrichtung, bei dem der Eingabemaschine 9 eine Speicherstation 31 vorgeordnet ist. Dann sind Beladestationen 32 am Anfang der Speicherstation 31 vorgesehen. Die Beladestationen 32 können so wie die Beladestationen 13 vor der Eingabemaschine 9 des Ausführungsbeispiels der Fig. 1 bis 7 ausgebildet sein. Nur sind die Beladestationen 32 nicht vor der Eingabemaschine 9 angeordnet, sondern am Anfang der Speicherstation 31. Die gezeigte Speicherstation 31 verfügt über vier nebeneinander angeordnete Beladestationen 32. Alle Beladestationen 32 sind vorzugsweise gleich ausgebildet. Es ist auch denkbar, dass die Speicherstation 31 eine kleinere oder größere Anzahl von Beladestationen 32 aufweist.

Auf jede Beladestation 32 folgt eine Speicherstrecke 33 der Speicherstation 31. Auch alle Speicherstrecken 33 sind vorzugsweise gleich ausgebildet. Insbesondere sind sie gleich lang und/oder mit einer gleichen Speicherkapazität versehen. Am Ende jeder Speicherstrecke 33 befindet sich eine Übergabeschleife 34, die zu einer Übergabestation 35 am Anfang der Eingabemaschine 9 führt. Bei der in der Fig. 8 gezeigten Vorrichtung ersetzt die jeweilige Übergabestation 35 die Beladestation 13 der Vorrichtung gemäß den Fig. 1 bis 7.

Jede Beladestation 32 vor der Speicherstation 31 weist eine Förderstrecke auf, an der mindestens eine Doppelklammer 19 oder eine Dreifachklammer 30 in Richtung zur jeweiligen Übergabestation 35 der Eingabemaschine 9 verfahrbar ist. Zur Speicherung einer Mehrzahl von Wäschestücken 10 auf der jeweiligen Speicherstrecke 33 ist es vorgesehen, dass der Förderstrecke mit einer Transportschiene jeder Speicherstrecke 33 eine Mehrzahl vorzugsweise gleicher in der Fig. 8 gezeigter Doppelklammern 19 zugeordnet sind. Alternativ kann es sich auch um Dreifachklammern 30 handeln. Die Doppelklammern 19 bzw. Dreifachklammern 30 werden längs der Transportschiene der jeweiligen Speicherstrecke 33 nach dem Beladen mit jeweils einem Wäschestück 10 in Zuführrichtung 11 zur Eingabemaschine 9 verfahren. Nach der Übergabe des an der jeweiligen Doppelklammer 19 oder Dreifachklammer 30 hängenden Wäschestücks 10 an die Spreizklammern der Spreizeinrichtung der Eingabemaschine 9 wird die jeweilige Doppelklammer 19 bzw. Dreifachklammer 30 längs der Transportschiene der Speicherstrecke 33 zurücktransportiert zur Beladestation 32, wo ein nächstes Wäschestücks 10 in die bereitgehaltene leere Doppelklammer 19 oder Dreifachklammer 30 einhängbar ist. Dieses Einhängen geschieht im Ausführungsbeispiel der Fig. 8 durch Bedienungspersonen 36. Alternativ ist es aber auch denkbar, dass die benachbarten Ecken 17 des vorderen Rands 18 des jeweiligen Wäschestücks 10 automatisch in die Doppelklammern 19 bzw. Dreifachklammern 30 eingehängt werden.

### Bezugszeichenliste:

- 9: Eingabemaschine
- 10: Wäschestück
- 11: Zuführrichtung
- 12: Zuführförderer
- 13: Beladestation
- 14: Beladeklammerpaar
- 15: Beladeklammer
- 16: Bedienungsperson
- 17: Ecke
- 18: vorderer Rand
- 19: Doppelklammer
- 20: Schlitten
- 21: Durchhang
- 22: Durchhang
- 23: berührungslose Messeinrichtung
- 24: Laserstrahl
- 25: tiefste Stelle
- 26: Verbindungslinie
- 27: Beladeklammer
- 28: Beladeklammer
- 29: Beladeklammer
- 30: Dreifachklammer
- 31: Speicherstation
- 32: Beladestation
- 33: Speicherstrecke
- 34: Übergabeschleife
- 35: Übergabestation
- 36: Bedienungsperson

## Patentansprüche

1. Verfahren zum Zuführen von Wäschestücken (10) zu einer Wäschereimaschine, wie insbesondere einer Mangel, wobei gegenüberliegende Ecken (17) eines vorderen, quer zur Zuführrichtung (11) verlaufenden Rands (18) eines jeweiligen Wäschestücks (10) in zwei Beladeklammern (15; 27, 28, 29) eingehängt werden, von denen das Wäschestück (10) an quer zur Zuführrichtung (11) verfahrbare Spreizklammern einer Spreizeinrichtung übergeben oder von den Spreizklammern übernommen wird, die Spreizklammern auseinandergefahren werden zum Ausbreiten des Wäschestücks (10) durch Strecken des vorderen Rands (18) desselben, und das ausgebreitete Wäschestück (10) von den Spreizklammern auf einer Ablegeleiste oder einem Zuführförderer (12) abgelegt wird, der das ausgebreitete Wäschestücke (10) zur Mangel oder einer sonstigen Wäschereimaschine transportiert, **dadurch gekennzeichnet, dass** die beiden die gegenüberliegende Ecke (17) des jeweiligen Wäschestücks (10) haltenden Beladeklammern (15; 27, 28, 29) einen solchermaßen großen oder größeren Abstand (A) zueinander aufweisen oder auf einen solchen Abstand (A) zueinander bringbar sind, dass sich beim von den beiden Beladeklammern (15; 27, 28, 29) herunterhängenden Wäschestück (10) ein V-artiger Durchhang (22) des vorderen Rands (18) ausbildet, eine wenigstens annähernd tiefste Stelle (25) des V-artigen Durchhangs (22) berührungslos ermittelt wird, und daraus die Länge des durchhängenden vorderen Rands (18) des Wäschestücks (10) abgeleitet wird.

2. Verfahren nach Anspruch 1, **dadurch gekennzeichnet, dass** mit dem bei der Messung des Durchhangs (22) vorhandenen Abstand (A) der Beladeklammern (15) das Wäschestück an die Spreizklammern übergeben wird oder von den Spreizklammern aus den Beladeklammern (15; 27, 28, 29) übernommen wird und/oder die tiefste Stelle (25) des Durchhangs (22) des vorderen Rands (18) des von den Beladeklammern (15; 27, 28, 29) herunterhängenden Wäschestücks (10) berührungslos und/oder optoelektronisch gemessen wird, vorzugsweise von mindestens einer berührungslos messenden Messeinrichtung (23), wie zum Beispiel einer bildgebenden Einrichtung, einer Zeilenkamera, einer Sensorleiste, einer Kamera, einem Laserfächer oder dergleichen.

3. Verfahren nach einem der vorhergehenden Ansprüche, **dadurch gekennzeichnet, dass** der Abstand der ermittelten tiefsten Stelle (25) oder der mindestens annähernd tiefsten Stelle (25) des V-artigen Durchhangs (22) des vorderen Rands (18) des Wäschestücks (10) von einer gedachten geraden Verbindungslinie (26) durch die benachbarten, jeweils eine der gegenüberliegenden Ecken (17) des V-artig durchhängenden vorderen Rands (18) des jeweiligen Wäschestücks (10) haltenden Beladeklammern (15; 27, 28, 29) ermittelt wird und daraus unter Einbeziehung des bekannten größeren bzw. vergrößerten Abstands der beiden Beladeklammern (15; 27, 28, 29) die Länge des vorderen Rands (18) ermittelt, vorzugsweise errechnet, wird.

4. Verfahren nach einem der vorhergehenden Ansprüche, **dadurch gekennzeichnet, dass** in die Beladeklammern (15; 27, 28, 29) von mindestens einer Bedienungsperson (16; 36) oder automatisch mittels vorzugsweise einer Handhabungseinrichtung gegenüberliegende Ecken (17) des vorderen Rands (18) des jeweiligen Wäschestücks (10) eingehängt werden.

5. Verfahren nach einem der vorhergehenden Ansprüche, **dadurch gekennzeichnet, dass** der Abstand (A) des die gegenüberliegenden Ecken (17) des jeweiligen Wäschestücks (10) haltenden Beladeklammern (15; 27, 28, 29) beim Beladen bzw. Aufnehmen der Ecken (17) kleiner ist als bei der berührungslosen Ermittlung des V-artigen Durchhangs (22) des vorderen Rands (18) des Wäschestücks (10) und/oder der tiefsten Stelle (25) oder der annähernd tiefsten Stelle (25) des V-artigen Durchhangs (22).

6. Verfahren nach einem der vorhergehenden Ansprüche, **dadurch gekennzeichnet, dass** gegenüberliegende Ecken (17) des vorderen Rands (18) des jeweiligen Wäschestücks (10) in zwei Beladeklammern (15) eines Beladeklammerpaars (14) oder in zwei Beladeklammern (27, 28, 29) einer Gruppe von mindestens drei Beladeklammern (27, 28, 29) eingehängt werden.

7. Verfahren nach einem der vorhergehenden Ansprüche, **dadurch gekennzeichnet, dass** ermittelt wird, in welche Beladeklammer (15; 27, 28, 29) eine Ecke (17) des vorderen Rands (18) des Wäschestücks (10) eingehängt ist, vorzugsweise durch einen Sensor und/oder Fühler.

## Claims

1. A method for feeding items of laundry (10) to a laundry machine, such as in particular a mangle, with opposite corners (17) of a front edge (18), running transversely with respect to the feeding direction (11), of a respective item of laundry (10) being suspended in two loading clamps (15; 27, 28, 29) from which the item of laundry (10) is transferred to spreading clamps, which are movable transversely with respect to the feeding direction (11), of a spreading device or is taken over by the spreading clamps, the spreading clamps are moved apart in order to spread out the item of laundry (10) by stretching the front edge (18) of same, and the spread-out item of laundry (10) is deposited by the spreading clamps on a depositing strip or on a feed conveyor (12) which transports the spread-out item of laundry (10) to the mangle or to another laundry machine, **characterized in that** the two loading clamps (15; 27, 28, 29) holding the opposite corners (17) of the respective item of laundry (10) are at such a large or relatively large distance (A) from one another or can be brought to such a distance (A) from one another that, when the item of laundry (10) is hanging down from the two loading clamps (15; 27, 28, 29), a V-like sag (22) of the front edge (18) is formed, an at least approximately lowest point (25) of the V-like sag (22) is contactlessly determined and the length of the sagging front edge (18) of the item of laundry (10) is derived therefrom.

2. The method as claimed in claim 1, **characterized in that** at the distance (A) between the loading clamps (15) that exists when the sag (22) is measured, the item of laundry is transferred to the spreading clamps or is taken over by the spreading clamps from the loading clamps (15; 27, 28, 29) and/or the lowest point (25) of the sag (22) of the front edge (18) of the item of laundry (10) hanging down from the loading clamps (15; 27, 28, 29) is contactlessly and/or opto-electronically measured, preferably by at least one contactless measuring device (23), such as, for example, an imaging device, a line scan camera, a sensor strip, a camera, a laser fan or the like.

3. The method as claimed in any one of the preceding claims **characterized in that** the distance of the determined lowest point (25) or of the at least approximately lowest point (25) of the V-like sag (22) of the front edge (18) of the item of laundry (10) from an imaginary straight connecting line (26) through the adjacent loading clamps (15; 27, 28, 29) respectively holding one of the opposite corners (17) of the V-like sagging front edge (18) of the respective item of laundry (10) is determined and, from this, taking into account the known relatively large or increased distance between the two loading clamps (15; 27, 28, 29), the length of the front edge (18) is determined, preferably calculated.

4. The method as claimed in any one of the preceding claims, **characterized in that** opposite corners (17) of the front edge (18) of the respective item of laundry (10) are suspended in the loading clamps (15; 27, 28, 29) by at least one operator (16; 36) or automatically by means of preferably a handling device.

5. The method as claimed in any one of the preceding claims, **characterized in that** the distance (A) between the loading clamps (15; 27, 28, 29) holding the opposite corners (17) of the respective item of laundry (10) is smaller during the loading or receiving of the corners (17) than during the contactless determination of the V-like sag (22) of the front edge (18) of the item of laundry (10) and/or of the lowest point (25) or of the approximately lowest point (25) of the V-like sag (22).

6. The method as claimed in any one of the preceding claims, **characterized in that** opposite corners (17) of the front edge (18) of the respective item of laundry (10) are suspended in two loading clamps (15) of a pair of loading clamps (14) or in two loading clamps (27, 28, 29) of a group of at least three loading clamps (27, 28, 29).

7. The method as claimed in any one of the preceding claims, **characterized in that** it is determined in which loading clamp (15; 27, 28, 29) a corner (17) of the front edge (18) of the item of laundry (10) is suspended, preferably by means of a sensor and/or feeler.

## Revendications

1. Procédé permettant d'amener des pièces de linge (10) à une machine de blanchisserie, comme en particulier une calandre, dans lequel des extrémités opposées (17) d'un bord avant (18), s'étendant transversalement à la direction d'amenée (11), d'une pièce de linge (10) respective sont accrochées dans deux pinces de chargement (15 ; 27, 28, 29) par lesquelles la pièce de linge (10) est transmise à des pinces d'écartement, mobiles transversalement à la direction d'amenée (11), d'un dispositif d'écartement, ou est prise en charge par les pinces d'écartement, les pinces d'écartement sont écartées pour étaler la pièce de linge (10) en étirant le bord avant (18) de celle-ci, et la pièce de linge (10) étalée est déposée par les pinces d'écartement sur une barrette de dépose ou un convoyeur d'amenée (12) qui transporte la pièce de linge (10) étalée jusqu'à la calandre ou à une autre machine de blanchisserie,
**caractérisé en ce que** les deux pinces de chargement (15 ; 27, 28, 29) maintenant les coins opposés (17) de la pièce de linge (10) respective présentent une distance (A) l'une par rapport à l'autre tellement grande ou plus grande, ou peuvent être amenées à une distance (A) telle qu'un affaissement en forme de V (22) du bord avant (18) se forme sur la pièce de linge (10) suspendue aux deux pinces de chargement (15 ; 27, 28, 29), un point (25) au moins approximativement le plus bas de l'affaissement en forme de V (22) est établi sans contact, et à partir de celui-ci, la longueur du bord avant (18) affaissé de la pièce de linge (10) est dérivé.

2. Procédé selon la revendication 1, **caractérisé en ce qu'**avec la distance (A) des pinces de chargement (15), présente lors de la mesure de l'affaissement (22), la pièce de linge est transmise aux pinces d'écartement ou est prise en charge par les pinces d'écartement à partir des pinces de chargement (15 ; 27, 28, 29), et/ou le point le plus bas (25) de l'affaissement (22) du bord avant (18) de la pièce de linge (10) suspendue par les pinces de chargement (15 ; 27, 28, 29) est mesuré sans contact et/ou de manière optoélectronique, de préférence par au moins un dispositif de mesure (23) effectuant une mesure sans contact, comme par exemple un dispositif d'imagerie, une caméra linéaire, une barrette de capteur, une caméra, un éventail laser ou similaires.

3. Procédé selon l'une quelconque des revendications précédentes, **caractérisé en ce que** la distance du point le plus bas (25) établi ou du point (25) au moins approximativement le plus bas de l'affaissement en forme de V (22) du bord avant (18) de la pièce de linge (10) est établie à partir d'une ligne de liaison (26) droite imaginaire par les pinces de chargement (15 ; 27, 28, 29) voisines, maintenant respectivement l'un des coins opposés (17) du bord avant (18) de la pièce de linge (10) respective, affaissé en forme de V, et la longueur du bord avant (18) est établie, de préférence calculée, à partir de celle-ci en tenant compte de la distance connue plus grande ou augmentée des deux pinces de chargement (15 ; 27, 28, 29).

4. Procédé selon l'une quelconque des revendications précédentes, **caractérisé en ce que** des coins opposés (17) du bord avant (18) de la pièce de linge (10) respective sont accrochés dans les pinces de chargement (15 ; 27, 28, 29) par au moins un opérateur (16 ; 36) ou automatiquement au moyen de préférence d'un dispositif de manipulation.

5. Procédé selon l'une quelconque des revendications précédentes, **caractérisé en ce que** la distance (A) des pinces de chargement (15 ; 27, 28, 29) maintenant les coins opposés (17) de la pièce de linge (10) respective est inférieure lors du chargement ou de la prise en charge des coins (17) à celle lors de l'établissement sans contact de l'affaissement en forme de V (22) du bord avant (18) de la pièce de linge (10) et/ou du point le plus bas (25) ou du point (25) approximativement le plus bas de l'affaissement en forme de V (22).

6. Procédé selon l'une quelconque des revendications précédentes, **caractérisé en ce que** des coins opposés (17) du bord avant (18) de la pièce de linge respective (10) sont accrochés dans deux pinces de chargement (15) d'une paire de pinces de chargement (14) ou dans deux pinces de chargement (27, 28, 29) d'un groupe d'au moins trois pinces de chargement (27, 28, 29).

7. Procédé selon l'une quelconque des revendications précédentes, **caractérisé en ce qu'**il est établi dans quelle pince de chargement (15 ; 27, 28, 29) un coin (17) du bord avant (18) de la pièce de linge (10) est accroché, de préférence par un capteur et/ou une sonde.
